# EUROPÄISCHE PATENTSCHRIFT

(11) **EP 0 943 928 B1**
(45) Veröffentlichungstag und Bekanntmachung des Hinweises auf die Patenterteilung: **15.09.2004**
(21) Anmeldenummer: 99104618.6
(22) Anmeldetag: 09.03.1999
(51) Int. Cl.: G01R 31/3181, G01R 31/28

(54) **Verfahren zum Bestimmen der Modulationsfehler eines digitalen Sendermodulators**
Method of determination of the modulation error of a transmitter modulator
Procédé de détermination de l'erreur de modulation d'un modulateur à transmission

(30) Priorität: 18.03.1998 DE 19811895
(43) Veröffentlichungstag der Anmeldung: 22.09.1999
(73) Patentinhaber: Rohde & Schwarz GmbH & Co. KG, 81671 München (DE)
(72) Erfinder: Maucksch, Thomas, 83104 Ostermünchen (DE)
(74) Vertreter: Graf, Walter, Dipl.-Ing.

(56) Entgegenhaltungen:
- EP-A- 0 708 389
- JP-A- 10 028 088
- US-A- 5 633 800
- US-A- 5 640 401

## Beschreibung

Die Erfindung betrifft ein Verfahren zum Bestimmen der Modulationsfehler eines digitalen Sendermodulators, beispielsweise eines I/Q-Modulators, für verschiedene Modulationsarten.

Zur Bestimmung der Übertragungsfehler bei Mobilfunksystemen ist es bekannt, von einem Testgerät über einen Sender ein Testsignal zu einem abgesetzten Testempfänger zu übertragen, das empfangene Testsignal dort mit einem gleichartigen Testsignal zu vergleichen und dadurch eventuelle Fehlerabweichungen zu ermitteln, die dann zum ursprünglichen Testgerät zurückübertragen werden (JP 10 028 088 A bzw. zugehörige nachveröffentlichte Patentschrift US-A-5,943,617).

Zum Bestimmen der Fehler an Maschinen wie Turbinen ist es auch schon bekannt, verschiedene Parameter dieser Maschine zu messen und die so gewonnenen analogen Meßdaten mit den entsprechenden Daten eines dazu passenden Modells einer solchen Maschine zu vergleichen. Anschließend werden diese den jeweiligen Parametern der Maschine zugeordneten Daten des Modells so verändert, bis diese mit den Meßdaten der Maschine übereinstimmen (US-A-5,633,800).

In der dritten Generation des Mobilfunks finden Geräte Anwendung, die unter dem Schlagwort "Software Radio" (SW Radio) bekannt sind. Darunter wird eine universelle Hardware-Plattform verstanden, die mit verschiedenen unterschiedlichen Software-Programmen betreibbar ist. Dieses Prinzip ist sehr flexibel, es kann mit möglichst unveränderter Hardware ein hoher Anteil an Funktionalität je nach verwendeter Software realisiert werden, beispielsweise auch verschiedene digitale Modulationsarten. Ein Software-Radio kann also viele verschiedene Modulationsarten realisieren und evtl. ist es auch noch für zukünftige Modulationsarten erweiterbar. Dazu müssen jedoch von dem hierbei benutzten Sendermodulator die Eigenschaften von beliebig vielen verschiedenen Modulationsarten bekannt sein.

Es ist daher Aufgabe der Erfindung, ein Verfahren aufzuzeigen, mit dem mit möglichst wenig Modulationsmessungen die Modulationsfehler für verschiedene in Betracht kommende Modulationsarten bestimmt werden können.

Diese Aufgabe wird gemäß der Erfindung durch die Merkmale des Patentanspruchs gelöst.

Gemäß der Erfindung werden die Fehler des zu untersuchenden Sendermodulators anhand einer einzigen Modulationsart bestimmt und anschließend werden für andere weitere Modulationsarten die Modulationsfehler nur rechnerisch am Rechnermodell ermittelt, indem am Rechnermodell andere Betriebsbedingungen, beispielsweise eine andere Modulationsart oder eine andere Leistung simuliert werden.

Die Erfindung wird im Folgenden anhand einer schematischen Zeichnung an einem Ausführungsbeispiel näher erläutert.

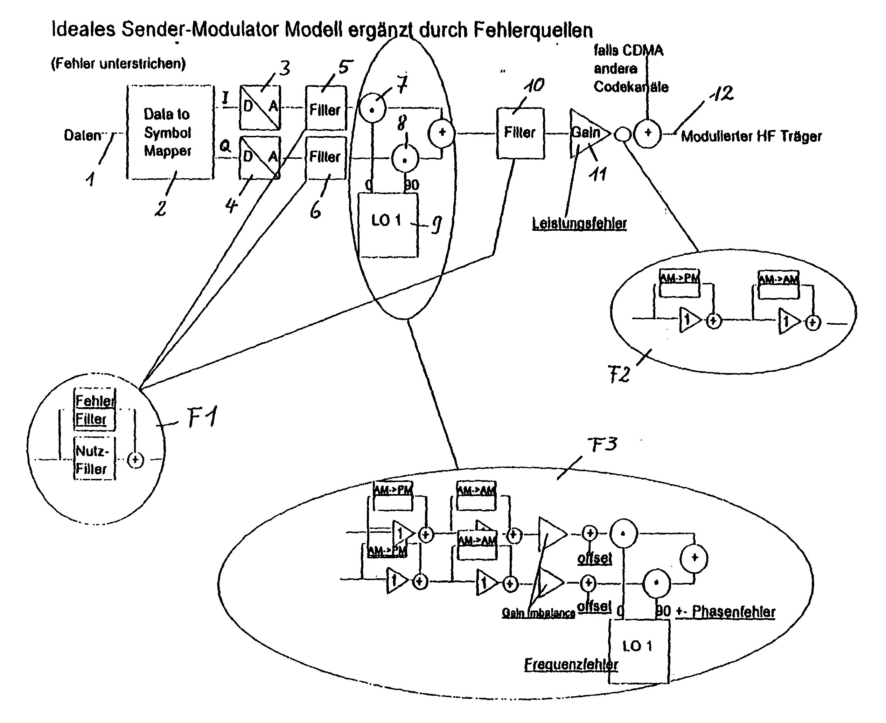

Die Figur zeigt das Standard-Prinzipschaltbild eines idealen linearen digitalen I/Q-Sendermodulators. Der serielle Datenstrom 1 wird durch einen normalerweise digitalen Mapper 2 in den komplexen digitalen Symbolstrom I und Q gewandelt. Nach D/A-Wandlung in den Wandlern 3 und 4 wird dieser in den Filtern 5 und 6 modulationsspezifisch gefiltert und dann in den Mischern 7 und 8 mit dem komplexen Signal eines Lokaloszillators 9 auf eine reelle Hochfrequenz HF umgesetzt, die wiederum nach Durchlaufen eines Filters 10 in einem Verstärker 11 verstärkt wird und schließlich als modulierter HF-Träger weiterbehandelt wird. Bei solchen Modulatoren können auch ggfs. noch mehrstufige Umsetzungen über Zwischenfrequenz vorgesehen sein, die der Übersichtlichkeit halber weggelassen sind.

Dieser ideale Sendermodulator nach der Figur wird als Modell in einen Rechner eingegeben und mit zusätzlichen Fehlern F1 bis F3 ergänzt, die in der Figur jeweils eingekreist dargestellt sind. Auf diese Weise wird im Rechner ein reales Modell eines solchen Sendermodulators mit all seinen möglichen Fehlern simuliert. Die Größe der als Funktionsmodule F1 bis F3 dargestellten Fehler ist zunächst noch offen und variabel. Die dargestellten Fehler F1 bis F3 sind Standardfehler, der Fehler F1 ist beispielsweise ein üblicher Filterfehler, der Fehler F2 Fehler in der Verstärkung bzw. im Mischer, der Fehler F3 beispielsweise ein Frequenzfehler des Überlagerungsoszillators 9 bzw. wiederum übliche Fehler in den Mischern. Das Verfahren gewinnt umsomehr an Qualität und Realitätsnähe, wenn soviel wie möglich der in der Realität auftretenden Fehler als Variable in das Modell mit aufgenommen werden.

Mit diesem so simulierten Realmodell eines Sendermodulators kann die ursachengerechte Aufteilung des Modulationsfehlers auf die Funktionsmodule eines realen Sendermodulators wie folgt bestimmt werden:

Zunächst wird an dem zu untersuchenden realen Sendermodulator die Kurvenform des Ausgangssignals bei Einspeisung des Nutzdatenstromes 1 auf einem Recorder aufgezeichnet. Derselbe Nutzdatenstrom 1, mit dem der reale Sendermodulator beaufschlagt wird, wird auch als Anregungssignal im Rechnermodell gemäß der Figur angewendet. Durch geeignete mathematische Verfahren werden die eingebauten variablen Fehler F1 bis F3 des Rechnermodells so geändert, daß das Ausgangssignal am Ausgang 12 des Modells mit der aufgezeichneten Kurvenform des realen Sendermodulators maximal übereinstimmt. Vorzugsweise erfolgt dies in bekannter Weise durch Bestimmung der minimalen quadratischen Abweichung der miteinander zu vergleichenden Kurvendaten.

Die auf diese Weise ermittelten Zahlenwerte für die Fehlerquellen F1 bis F3 sind das gewünschte Ergebnis, der Benutzer braucht dann nur noch diese Zahlenwerte der einzelnen Fehlerquellen den entsprechenden Funktionsmodulen des realen Sendermodulators zuzuordnen. Er kennt damit dann die Größe der Fehlerquellen, also beispielsweise die Größe der Filterfehler aus F1, den Verstärkungsfehler aus F2 bzw. einen eventuellen Frequenzfehler aus F3. Auf diese Weise kann also rein rechnerisch eine große Vielfalt von Fehlertypen systematisch unterschieden werden. Bei begrenztem Detaillierungsgrad des Modells kann es zwar zu nicht unterscheidbaren Fehlern kommen, also beispielsweise zwei Ursachen, welche die gleiche Wirkung haben. Solche Fehler können jedoch durch Verfeinerung des Modells wieder unterschieden werden.

Die folgende Fehlersystematik zeigt beispielhaft die Vielfalt der unterscheidbaren Fehlertypen, in Klammern sind dabei die jeweils möglichen verursachenden Funktionsmodule erwähnt.

| | | |
|---|---|---|
| A) Triviale Fehler | | |
| A1) Abweichng von der Idealleistung | | (Verstärkungsfehler) |
| A2) Frequenzfehler | | (Synthesizerfehler) |
| | | |
| B1 Deterministische Fehler ohne Gedächtnis | | |
| B1.0) konstant | I/Q offset | (I/Q Modulator) |
| B1.1) linear | I/Q imbalance | (I/Q Modulator) |
| B1.2) quadratische Verzerrungen AM->AM | | (Verstärker, Mischer) |
| B1.3) kubische Verzerrungen AM->AM | | (Verstärker, Mischer) |
| | | |
| B2 Deterministische Fehler mit Gedächtnis | | |
| B2.1) linear | | (Fehlerhafte Filterkoeffizienten) |
| B2.2) AM->PM Conversion, linearer Zusammenhang AM->PM (ist bereits eine Verzerrung und entspricht B1.2) | | (Verst., Misch.) |
| B2.3) AM->PM Conversion, quadratischer Zusammenhang AM->PM | | (Verst., Misch.) |
| B2.4) AM->PM Conversion, kubischer Zusammenhang AM->PM | | (Verst., Misch.) |
| | | |
| B3) Übersprechen von Nutzsignalen auf unabhängige Pfade | | (I->Q, Q->I) |
| | | |
| Handelt es sich um einen CDMA Sendermodulator, so kann die bisher beschriebene Fehlersystematik (A bis B3) für jeden Codekanal getrennt bestimmt werden. | | |
| Der beim oben genannten Minimierungsprozess übrig bleibende Rest bildet die | | |
| C) Unabhängigen Additiven Fehler | | (LO-Rauschen) |

Zur Ermittlung der Modulationsfehler von einer beliebigen Anzahl N von verschiedenen Modulationsarten, die auf einem universellen digitalen Sendermodulator eingestellt und betrieben werden können, wie dies beim erwähnten SW-Radio der Fall ist, werden an dem zu untersuchenden Sendermodulator nach dem oben erwähnten Verfahren mittels eines entsprechenden fehlerbehafteten Modells die verschiedenen möglichen Fehler in den Funktionsmodulen ermittelt und die damit ermittelten Zahlenwerte, die den unterschiedlichen Fehlertypen des Modells zugeordnet sind, werden festgehalten. Anschließend wird dann das Rechenmodell des zu untersuchenden Sendermodulators in anderen Betriebsarten, also beispielsweise mit anderer Leistung und anderer Modulationsart betrieben und das dabei entstehende Ausgangssignal wird einem bekannten Modulationsanalyseverfahren, wie es einleitend beispielsweise für GSM bzw. TETRA erwähnt ist, unterworfen. Auf diese Weise können an ein und demselben Sendermodulator die Fehler für verschiedene in Betracht kommende digitale oder analoge Modulationsarten durch Rechnung aus den einmal bestimmten Fehlerdaten des Sendermodulators bestimmt werden und dazu muß nur eine einzige geeignete digitale Modulationsart meßtechnisch nach dem eingangs erwähnten Verfahren praktiziert werden.

Dabei ist es vorteilhaft, für den zu untersuchenden Sendermodulator ein Modell zu entwerfen, bei dem alle denkbaren Fehler vorhanden und berücksichtigt sind. Weiterhin muß die meßtechnisch praktizierte Modulationsart eine anspruchsvolle sein, nämlich eine solche, die von allen Fehlern auch beeinträchtigt wird. So können dann auch alle weiteren anspruchsvollen und weniger anspruchsvollen Modulationsarten rechnerisch genau bestimmt werden.

## Patentansprüche

1. Verfahren zum Bestimmen der Modulationsfehler eines digitalen Sendermodulators für verschiedene Modulationsarten,
wobei der Sendermodulator für eine ausgewählte Modulationsart mit seinen Nutzfunktionen und seinen möglichen Fehlerquellen in einem Rechner als Modell nachgebildet wird,
wobei das nachgebildete Rechnermodell und der reale Sendermodulator für diese ausgewählte Modulationsart mit dem gleichen digitalen Datenstrom beaufschlagt werden,
wobei die Kurvenform des Ausgangssignals des realen Sendermodulators aufgezeichnet und mit dem Ausgangssignal des Rechnermodells verglichen wird und dabei die Fehlerquellen des Rechnermodells verändert werden, bis beide Ausgangssignale optimal übereinstimmen,
wobei die den veränderten Fehlerquellen entsprechenden Werte des Rechnermodells den entsprechenden Funktionsmodulen des Sendermodulators zugeordnet werden und
wobei schließlich mit Hilfe des Rechnermodells die Modulationsfehler für andere Modulationsarten bestimmt werden.

## Claims

1. Method for determining the modulation error of a digital transmitter modulator for different modulation types,
wherein the transmitter modulator is mapped in a computer with its useful functions and possible error sources as a model for a selected modulation type,
wherein the mapped computer model and the real transmitter modulator are supplied with the same digital data stream for this selected modulation type,
wherein the curve form of the output signal from the real transmitter modulator is registered and compared with the output signal from the computer model and, in this context, the error sources of the computer model are modified, until both output signals agree in an optimum manner,
wherein the values of the computer model corresponding to the modified error sources are associated with the corresponding functional modules of the transmitter modulator and
wherein, finally, with the assistance of the computer model, the modulation errors for other modulation types are determined.

## Revendications

1. Procédé de détermination des erreurs de modulation d'un modulateur d'émetteur numérique pour différents types de modulation, moyennant quoi le modulateur d'émetteur est représenté, pour un type de modulation sélectionné, avec ses fonctions utiles et ses sources possibles d'erreurs, dans un ordinateur en tant que modèle, moyennant quoi le modèle informatique représenté et le modulateur d'émetteur réel pour ce type de modulation sélectionné sont alimentés avec le même flux de données numériques, moyennant quoi la forme de la courbe du signal de sortie du modulateur d'émetteur réel est représentée et comparée avec le signal de sortie du modèle informatique et les sources d'erreurs du modèle informatique sont modifiées jusqu'à ce que les deux signaux de sortie soient harmonisés de manière optimale, moyennant quoi les valeurs du modèle informatique, correspondant aux sources d'erreurs modifiées, sont attribuées aux modules de fonctions correspondants du modulateur d'émetteur et moyennant quoi finalement, à l'aide du modèle informatique, les erreurs de modulation sont déterminées pour d'autres types de modulation.
